# EUROPÄISCHE PATENTSCHRIFT

(11) **EP 0 741 965 B1**
(45) Veröffentlichungstag und Bekanntmachung des Hinweises auf die Patenterteilung: **04.02.1998**
(21) Anmeldenummer: 96106947.3
(22) Anmeldetag: 03.05.1996
(51) Int. Cl.: A01K 5/02

(54) **Fütterungseinrichtung für Haustiere, insbesondere Schweine**
Feeding installation for domestic animals, particularly for pigs
Mangeoire pour animaux domestiques, en particulier des porcs

(30) Priorität: 11.05.1995 DE 19517283
(43) Veröffentlichungstag der Anmeldung: 13.11.1996
(73) Patentinhaber: B. Mannebeck Landtechnik GmbH, 48465 Quendorf (DE)
(72) Erfinder: Mannebeck, Bernhard, 48465 Quendorf (DE)
(74) Vertreter: Schulze Horn & Partner

(56) Entgegenhaltungen:
- WO-A-85/04305
- DD-A- 144 704
- DE-B- 2 150 968
- NL-A- 8 802 062
- US-A- 4 508 061

## Beschreibung

Die Erfindung betrifft eine Fütterungseinrichtung nach dem Oberbegriff des Anspruchs 1.

Eine Fütterungseinrichtung der eingangs genannten Art ist aus US-PS 4 508 061 bekannt. Bei dieser Fütterungseinrichtung ist das Futterförderrohr sehr kurz ausgebildet und besteht praktisch nur aus dem Mundstück. Die Auslösemittel für den Antrieb des Fördermittels bestehen hier aus einem einfachen Hebel, der oberhalb des Mundstückes liegt, so daß er beim Erfassen des Mundstückes durch ein Tier nach unten gedrückt wird. Durch diese Hebelbetätigung wird bei einer Ausführung dieser bekannten Fütterungseinrichtung ein elektrischer Schalter betätigt, der seinerseits einen Elektromotor aktiviert, der über ein Zahnradgetriebe mit dem Fördermittel im Futterförderrohr verbunden ist.

Als nachteilig wird bei dieser bekannten Fütterungseinrichtung angesehen, daß sie nur für die Verfütterung von Trockenfutter geeignet ist, welches von den Tieren nicht verlustfrei gefressen werden kann. Vielmehr müssen die Tiere ständig zwischen der Fütterungseinrichtung und einer Tränke hin und her wechseln, um zusätzlich zu dem Trockenfutter eine ausreichende Wassermenge aufzunehmen. Ein weiterer Nachteil der bekannten Fütterungseinrichtung wird darin gesehen, daß die Auslosemittel für den Antrieb des Fördermittels aus nur einem einseitig oberhalb des Mundstücks angeordneten Hebel gebildet sind. Diese Konstruktion kann dazu führen, daß ein Tier ohne das Mundstück in sein Maul zu nehmen den Hebel von oben her betätigt, wodurch eine Futterabgabe erfolgt, ohne daß ein Tier dieses Futter aufnimmt. Hierdurch werden Futterverluste verursacht und die Hygiene im Stall wird beeinträchtigt.

Weiterhin ist aus praktischen Versuchen eine Fütterungseinrichtung bekannt, bei der in einem Behälter Trockenfutter mit Wasser zu einem Brei angemischt wird. Der angemischte Brei wird innerhalb des Behälters unter Druck gesetzt und über längere Leitungen vom Aufstellungsort des Behälters zu verschiedenen Futterplätzen gefördert. An jedem Futterplatz ist an dem zugehörigen Förderleitungsende je ein Futternippel angebracht, der wie ein bekanntes Tränkeventil für Viehtränken aufgebaut ist. Als nachteilig hat sich bei dieser Fütterungseinrichtung herausgestellt, daß das angemischte Futter innerhalb der Leitungen zum Nachquellen neigt und hierdurch Verstopfungen in den Leitungen und in den Futternippeln sowie den zugehörigen Ventilen verursacht werden. Diese Verstopfungen können nur mit sehr großem Aufwand wieder behoben werden, so daß diese Fütterungseinrichtung die für einen landwirtschaftlichen Betrieb erforderliche Zuverlässigkeit nicht aufweist.

Aus der DD-PS 144 704 ist eine Tränke für Jungsäuger, insbesondere für Ferkel und Kälber bekannt, bei welcher in das von den Tieren aufgenommene Trinkwasser Minerale und/oder Medikamente eingemischt werden können. Hierzu müssen die zuzugebenden Minerale und/oder Medikamente aber wasserlöslich sein, da die Tränke keinerlei Fördermittel für eine Förderung der Minerale oder Medikamente aufweist. Für die Herstellung und Abgabe von Futterzubereitungen ist diese Tränke nicht geeignet.

Schließlich ist aus EP 0 456 889 A2 noch ein Selbsttränkeventil für Haustiere bekannt, das aber ebenfalls nur für die Verabreichung von Wasser oder anderen Flüssigkeiten, wie Milchersatznahrung, geeignet ist.

Es stellt sich deshalb die Aufgabe, eine Fütterungseinrichtung der eingangs genannten Art zu schaffen, die die aufgeführten Nachteile vermeidet und die insbesondere dem zu fütternden Tier eine gut aufnehmbare und leicht verwertbare Futterzubereitung zur Verfügung stellt, die Futterverluste vermeidet und die einen zuverlässigen und wartungsarmen Betrieb gewährleistet. Dabei soll die Fütterungseinrichtung sowohl in einfachen Fütterungssystemen, z.B. mit einer Sattfütterung, als auch in aufwendigeren Fütterungssystemen, z.B. mit rationierter Einzeltierfütterung in der Gruppe, einsetzbar sein.

Die Lösung dieser Aufgabe gelingt erfindungsgemäß durch eine Fütterungseinrichtung der eingangs genannten Art, die dadurch gekennzeichnet ist, daß im Verlauf der Förderrohres zwischen den Vorratsbehälter und dem Mundstück mindestens eine Flüssigkeitszuführleitung einmündet, durch welche dosiert Flüssigkeit(en) in das durch das Futterförderrohr geförderte Futter einleitbar und einmischbar ist/sind.

Die erfindungsgemäße Fütterungseinrichtung bietet den Vorteil, daß den Tieren eine Futterzubereitung in einer Konsistenz und Zusammensetzung angebotet werden kann, die eine problemlose Aufnahme des Futters ohne Futtervergeudung und ohne Futterverschmutzung gewährleistet. Hierdurch werden eine besonders gute Futterverwertung und eine verbesserte Hygiene erreicht. Ein weiterer wesentlicher Vorteil der Erfindung liegt darin, daß sich in der Fütterungseinrichtung immer nur eine relativ kleine Menge von fertig angemischter Futterzubereitung befindet, da die Anmischung des Trockenfutters mit der/den Flüssigkeit(en) erst kurz vor der Aufnahme durch das Tier erfolgt. Im Vorratsbehälter wird lediglich Trockenfutter vorgehalten, das problemlos lange lagerfähig ist. Ein Vergähren von angemischtem breiförmigen Futter und ein Nachquellen in Förderleitungen wird so vermieden. Schließlich benötigt die erfindungsgemäße Fütterungseinrichtung am Mundstück keine störanfälligen Ventile, so daß auch von dieser Seite ein zuverlässiger Betrieb der Einrichtung gewährleistet ist. Bei den durch die Flüssigkeitszuführleitung zugeführten Flüssigkeiten kann es sich um alle in der Tierfütterung und -behandlung verwendbaren Flüssigkeiten handeln, in erster Linie Trinkwasser, aber auch Milch, Molke, Essiglösung oder andere Flüssigkeiten.

Weiterhin ist vorgesehen, daß in jede Flüssigkeitszuführleitung mindestens ein Ventil eingeschaltet ist, welches mit den Auslösemitteln oder dem Antrieb derart gekoppelt ist, daß das Ventil bei Betätigung der Auslösemittel oder bei aktiviertem Antrieb geöffnet und bei Nichtbetätigung der Auslösemittel oder bei stillstehendem Antrieb schließt. Auf diese Weise wird sichergestellt, daß stets passende und keine überschüssigen Flüssigkeitsmengen in das Futter gelangen und daß das von dem Tier aufgenommene Futter immer ausreichend mit Flüssigkeit angemischt ist.

Eine Weiterbildung der zuletzt beschriebenen Ausführung der Fütterungseinrichtung schlägt vor, daß durch das erwähnte Ventil oder durch ein zweites Ventil die je Zeiteinheit oder je Trockenfutter-Mengeneinheit in das Futterförderrohr eingeleitete Flüssigkeitsmenge einstellbar ist. Hierdurch kann die Konsistenz des am Mundstück abgegebenen Futters optimal eingestellt werden, z.B. in Abhängigkeit von der Art des Trockenfutters oder vom Alter der jeweils zu fütternden Tiere. Die Konsistenz des abgegebenen Futters kann dabei von brei- bis teigförmig variieren, ohne daß dies einen negativen Einfluß auf die Funktion der Einrichtung hat.

Um sicherzustellen, daS das abgegebene Futter eine gleichmäßige und für das fressende Tier angenehme Konsistenz aufweist, ist vorgesehen, daß zwischen der Einmündung der Flüssigkeitszuführung in das Futterförderrohr und dem Mundstück eine für die Erzeugung einer homogenen brei- bis teigförmigen Futter-Flüssigkeits-Mischung ausreichend lange Mischstrecke vorgesehen ist. Für die Länge einer solchen Mischstrecke können in der Praxis schon einige Zentimeter ausreichen, so daß hierfür kein besonderer Platzbedarf bei der Installation der Fütterungseinrichtung in einem Stall erforderlich ist.

Ein besonders gut für die erfindungsgemäße Fütterungseinrichtung geeignetes Fördermittel ist eine Förderschnecke mit veränderbarer Drehzahl. Die Förderschnecke erstreckt sich vorzugsweise vom Futterbehälter durch das Futterförderrohr bis unmittelbar vor oder sogar in das Mundstück. Hierdurch wird eine zuverlässige Förderung von Futter zunächst aus dem Vorratsbehälter in das Futterförderrohr sowie eine intensive Durchmischung des zugeförderten Wassers mit dem zugeförderten Trockenfutter gewährleistet. Außerdem wird das Futter bis unmittelbar vor seiner Abgabe an das fressende Tier durch das Futterförderrohr und das Mundstück zwangsgefördert, was Verstopfungen praktisch ausschließt. Schließlich kann allein durch einfache Änderung der Drehzahl bzw. Drehgeschwindigkeit der Förderschnecke die Menge der je Zeiteinheit ausgegebenen Futterzubereitung beeinflußt und auf gewünschte Werte geregelt werden.

Um sicherzustellen, daS eine Futterabgabe nur dann erfolgt, wenn ein Tier das Mundstück tatsächlich in sein Maul genommen hat, wird vorgeschlagen, daß die Auslösemittel durch ein Paar von zwei räumlich getrennt betätigbaren Kontakten gebildet sind, wobei ein erster Kontakt oberhalb des Mundstücks und ein zweiter Kontakt unterhalb des Mundstücks betätigbar ist. Eine Auslösung des Antriebes des Fördermittels erfolgt dabei nur, wenn beide Kontakte gleichzeitig betätigt werden. Bei Betätigung nur eines Kontaktes wird dagegen noch kein Futter abgegeben. Hierdurch wird ein Futterverlust durch "Spielen" mit der Fütterungseinrichtung ausgeschlossen.

Ein besonders geeigneter Antrieb für das Fördermittel ist ein drehzahlvariabler Elektromotor, da dieser problemlos kompakt und ausreichend leistungsstark ausgeführt werden kann und eine zuverlässige und wartungsarme Betriebsweise sicherstellt. Auch ist der technische Aufwand für eine Drehzahlregelung gering.

Ebenfalls aus Gründen eines zuverlässigen Betriebes und um den Betreiber der Fütterungseinrichtung von manuellen Eingriffen möglichst weitgehend zu entlasten ist vorgesehen, daß das Ventil/die Ventile als Magnetventil und/oder Motorstellventil ausgeführt ist/sind.

Damit der Betreiber der Fütterungseinrichtung einen genauen Überblick über den Futtermittelverbrauch der Fütterungseinrichtung erhält, kann an dieser eine die aus dem Vorratsbehälter abgegebene Futtermenge erfassende Meßeinrichtung vorgesehen sein. Die genannte Meßeinrichtung kann beispielsweise dadurch gebildet werden, daß mittels eines Zählers die Anzahl der Umdrehungen des Fördermittels oder des zugehörigen Antriebes erfaßt wird, woraus sich dann die abgegebene Futtermenge berechnen läßt, da die Fördermenge des Fördermittels proportional zu der Zahl der von diesem ausgeführten Umdrehungen ist. Alternativ kann die Meßeinrichtung auch eine Waage umfassen, wobei dann z.B. der Trockenfutter-Vorratsbehälter als Wiegebunker ausgeführt sein kann.

In einer einfachen Ausführung kann die Fütterungseinrichtung für eine Sattfütterung eingesetzt werden, bei der sich jedes Tier, das sich an der Fütterungseinrichtung bedient, sattfressen kann. Für die Verwendung der erfindungsgemäßen Fütterungseinrichtung in Fütterungssystemen, bei denen der Betreiber einen größeren Einfluß auf die Fütterung nehmen kann, besitzt die Fütterungseinrichtung eine zentrale Steuereinheit, mit der der Antrieb des Fördermittels, die Dosierung der zugeführten Flüssigkeit(en) und gegebenenfalls die abgegebene Futtermenge nach Maßgabe der Auslösemittel und gegebenenfalls vorgegebener und/oder vorgebbarer in der Steuereinheit gespeicherter Daten steuer- und regelbar ist. Die zentrale Steuereinheit umfaßt vorzugsweise einen Mikroprozessor oder Mikrocomputer, wie dies an sich von automatisierten, elektronisch gesteuerten Fütterungseinrichtungen bekannt ist.

Eine weitere Ausgestaltung der Fütterungseinrichtung sieht vor, daß die Steuereinheit eine Tieridentifizierungseinrichtung umfaßt und daß in der Steuereinheit für jedes Tier einer Herde die von jedem einzelnen Tier aufgenommene Futtermenge individuell erfaßbar und speicherbar und auf Abruf in Form von Daten ausgebbar ist. Mit einer so ausgeführten Fütterungseinrichtung bekommt der Betreiber einen genauen Überblick über die Futteraufnahme jedes einzelnen Tieres, was die Überwachung des Bestandes vereinfacht und ein frühzeitiges Eingreifen beim Auftreten von individuellen Abweichungen, z.B. infolge beginnender Erkrankungen, erleichtert.

Schließlich bietet die Ausführung der Fütterungseinrichtung mit einer Steuereinheit die Möglichkeit, daß in der Steuereinheit für jedes Tier der Herde je ein Fütterungsprogramm mit einer an jedes einzelne Tier je Zeiteineinheit abzugebende maximale Futtermenge vorab eingebbar und speicherbar ist. Auf diese Weise kann ein vorab festgelegtes und in Form von Daten gespeichertes Fütterungsprogramm für jedes Tier durchgeführt werden, z.B. um eine möglichst gleichmäßige Gewichtszunahme bei optimalem Futtereinsatz zu erreichen.

Schließlich kann die Fütterungseinrichtung dahingehend ergänzt werden, daß sie neben dem Trockenfutter-Vorratsbehälter noch einen oder mehrere an das Futterförderrohr angeschlossene Zusatzbehälter aufweist, aus denen wahl- oder bedarfsweise Zusatzfuttermittel, Minerale, Medikamente oder sonstige zusätzliche Stoffe in das Futter eingegeben werden können. Bei Ausstattung der Fütterungseinrichtung mit einer zentralen Steuereinheit kann diese Zugabe von zusätzlichen Stoffen in das Futter auch nach Maßgabe und unter Kontrolle der Steuereinheit sowie von darin vorab gespeicherten Programmen und Daten für Menge und/oder Zeitpunkt der Zugabe erfolgen.

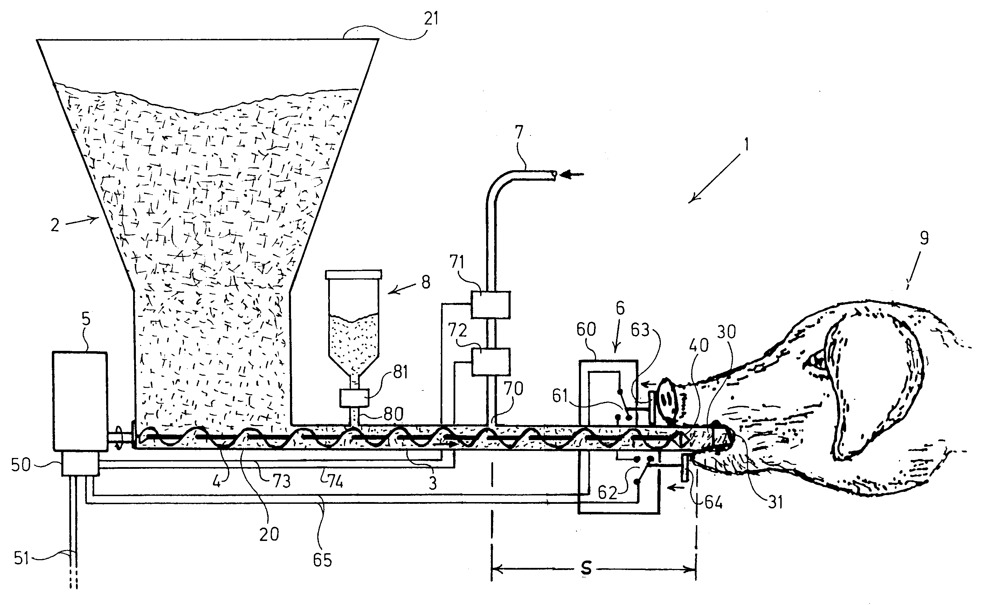

Ein Ausführungsbeispiel der erfindungsgemäßen Fütterungseinrichtung wird im folgenden anhand einer Zeichnung erläutert. Die einzige Figur der Zeichnung zeigt eine Fütterungseinrichtung in einer schematischen Darstellung, teils in Ansicht, teils im Schnitt.

Gemäß der Zeichnung besitzt das hier dargestellte Ausführungsbeispiel einer Fütterungseinrichtung 1 einen Trockenfutter-Vorratsbehälter 2, der allgemein trichterförmig mit einer offenen Oberseite 21 ausgeführt ist. Nach unten hin ist der Vorratsbehälter 2 durch einen Boden 20 abgeschlossen. Parallel zum Boden geht vom Vorratsbehälter 2 ein Futterförderrohr 3 in einer im wesentlichen horizontalen Richtung ab. Durch das Futterförderrohr 3 und durch den unteren Teil des Vorratsbehälters 2 verläuft ein Fördermittel 4, hier eine Förderschnecke. Das Fördermittel 4 ist durch einen außerhalb des Vorratsbehälters 2 angeordneten Antrieb 5, hier ein Elektromotor, in Drehung versetzbar, wodurch das Fördermittel 4 seine Förderwirkung entfaltet. Die Förderrichtung des Fördermittels 4 verläuft vom vorratsbehälter 2 durch das Futterförderrohr 3 zu dessen freien Ende 30 hin, an welchem ein Mundstück 31 angebracht ist. Das Fördermittel 4 endet dort in einem freien Ende 40 in einem geringen Abstand vor dem Mundstück 31.

Im Verlauf des Futterförderrohres 3 mündet in dieses zwischen dem Vorratsbehälter 2 und dem Mundstück 31 eine Flüssigkeitszuleitung 7 in einer Einmündung 70 ein. Die Zuleitung 7 ist hier z.B. mit einem Trinkwasseranschluß verbunden. In ihrem Verlauf sind in die Zuleitung 7 beim dargestellten Ausführungsbeispiel ein erstes Ventil 71 und ein zweites Ventil 72 hintereinander eingeschaltet. Das erste Ventil 71 ist hier ein fernbetätigbares Auf-Zu-Ventil; das zweite Ventil 72 ist hier ein Regelventil zur Veränderung der Durchflußmenge.

Weiterhin umfaßt die Fütterungseinrichtung 1 gemäß der Zeichnung Auslösemittel 6, die durch ein Tier 9 betätigbar sind. Die Auslösemittel 6 umfassen zwei elektrische Kontake 61, 62, die in Reihe geschaltet sind. Betätigbar sind die Kontakte 61, 62 über je eine Betätigungsplatte 63, 64, wobei die eine Betätigungsplatte 63 oberhalb des freien Endes 30 des Futterförderrohres 3 und oberhalb des Mundstücks 31 und die zweite Betätigungsplatte 64 unterhalb des freien Endes 30 und des Mundstücks 31 liegt. Die Betätigungsplatten sind über mechanische Verbindungsmittel, z.B. Stößel, mit den Kontakten 61, 62 verbunden, wobei durch Verschiebung der Betätigungsplatten im Sinne der daran eingezeichneten Bewegungspfeile nach links die beiden Kontakte 61, 62 geschlossen werden. Die Rückführung der Betätigungsplatten 63, 64 und die Rückstellung der Kontakte 61, 62 in ihre Öffnungsstellung erfolgt selbsttätig, z.B. mittels Federkraft. Die Betätigung der Kontakte 61, 62 erfolgt durch ein zur Aufnahme von Futter aus der Fütterungseinrichtung 1 bereites Tier 9, hier z.B. ein Mastschwein. Das Tier 9 nimmt das Mundstück 31 am freien Ende 30 des Futterförderrohres 3 in seine Schnauze und verschiebt dabei mit dem Oberkiefer die obere Betätigungsplatte 63 und mit seinem Unterkiefer die untere Betätigungsplatte 64 nach links. Hierdurch werden beide Kontakte 61, 62 geschlossen, wodurch ein Stromkreis geschlossen wird, der über eine elektrische Verbindungsleitung 65 und eine Schalteinheit 50 mit dem Antrieb 5 verbunden ist. Die Schaltung ist dabei so, daß bei Schließen beider Kontakte 61, 62 der Antrieb 5, d.h. dessen Elektromotor aktiviert wird, wodurch das Fördermittel 4 in Drehung versetzt wird. Gleichzeitig werden über elektrische Verbindungen 73, 74 zwischen der Schalteinheit 50 und den Ventilen 71, 72 diese geöffnet bzw. auf einen gewünschten Durchfluß je Zeiteinheit eingestellt.

Auf diese Weise wird zunächst trockenes, im Trockenfutter-Vorratsbehälter 2 vorgehaltenes Futter aus dem unteren Teil des Vorratsbehälters 2 in das Futterförderrohr 3 gefördert. Gleichzeitig wird eine vorgegebene Menge von Flüssigkeit, hier Trinkwasser, je Zeiteinheit durch die Zuleitung 7 und über die Ventile 71, 72 zur Einmündung 70 in das Futterförderrohr 3 geleitet. An dieser Stelle tritt das Wasser in das zunächst noch trockene Futter ein. Entlang einer Wegstrecke S, die sich von der Einmündung 70 bis zum freien Ende 40 des Fördermittels 4 erstreckt, wird nun das Futter mit dem zugegebenen Wasser vermischt und es wird so eine in ihrer Konsistenz einstellbare, brei- bis teigförmige Futterzubereitung erzeugt. Diese Futterzubereitung tritt am freien Ende 30 des Futterförderrohres 3 durch das dort angebracht Mundstück 31 unmittelbar in das Maul des Tieres 9 aus und kann von diesem aufgrund der angegebenen Konsistenz ohne weiteres, insbesondere ohne die zusätzliche Aufnahme von Wasser aus einer gesonderten Tränke, aufgenommen und heruntergeschluckt werden.

In der hier dargestellten Ausführung der Fütterungseinrichtung 1 erfolgt die Förderung von Futterzubereitung aus dem Mundstück 31 so lange wie das Tier 9 beide Betätigungsplatten 63, 64 in ihrer nach links verschobenen Stellung hält. Damit ist die Fütterungseinrichtung 1 insbesondere für eine Sattfütterung geeignet.

Zusätzlich können an der Fütterungseinrichtung 1 hier nicht dargestellte Meßeinrichtungen zur Erfassung der aus dem Vorratsbehälter 2 abgegebenen Futtermenge und der zugeleiteten Wassermenge vorgesehen sein, um statistische Auswertungen zu ermöglichen. Weiterhin kann die Schalteinheit 50 zu einer zentralen Steuereinheit ausgebaut werden, die einen Mikroprozessor oder Mikrocomputer umfaßt, was die Kombination der Fütterungseinrichtung 1 mit einem an sich bekannten Tieridentifizierungssystem ermöglicht. Auf diese Weise können dann jedem Tier 9, das zusammen mit einer Gruppe von Tieren die Fütterungseinrichtung 1 benutzt, eine vorprogrammierbare Futterrationen in einer ebenfalls vorgebbaren Konsistenz und Zusammensetzung verabreicht werden.

Schließlich ist in der Zeichnung noch ein ebenfalls an das Futterförderrohr 3 angeschlossener Zusatzbehälter 8 dargestellt, der im Verhältnis zum Trockenfutter-Vorratsbehälter 2 kleiner ist. Dieser Zusatzbehälter 8 dient insbesondere zur Aufnahme und Vorhaltung von Futterzusatzstoffen, z.B. Mineralen oder Medikamenten. Diese Zusatzstoffe können über eine Dosierschleuse 81 und ein Fallrohr 80 ebenfalls in das Futterförderrohr 3 eingeschleust werden und darin mit dem übrigen Futter vermischt und so dem Tier 9 zugeführt werden. Auch die Dosierschleuse 81 kann fernbetätigbar ausgeführt werden und dann ebenfalls von der schalteinheit 50 oder einer zentralen Steuereinheit aus betätigt werden.

## Patentansprüche

1. Fütterungseinrichtung für Haustiere, insbesondere Schweine, mit einem Trockenfutter-Vorratsbehälter (2), mit einem vom Vorratsbehälter (2) abgehenden Futterförderrohr (3), mit einem im Förderrohr (3) angeordneten Fördermittel (4), mit einem von einem zu fütternden Tier (9) mit dem Maul umfaßbaren Mundstück (31) am freien Ende (30) des Futterförderrohrs (3) und mit im Bereich des Mundstücks (31) angeordneten, von dem Tier (9) beim Aufnehmen des Mundstücks (31) betätigbaren Auslösemitteln (6) für einen Antrieb (5) des Fördermittels (4),
**dadurch gekennzeichnet**,
daß im Verlauf des Förderrohres (3) zwischen dem Vorratsbehälter (2) und dem Mundstück (31) mindestens eine Flüssigkeitszuführleitung (7) einmündet, durch welche dosiert Flüssigkeit(en) in das durch das Futterförderrohr (3) geförderte Futter einleitbar und einmischbar ist/sind.

2. Fütterungseinrichtung nach Anspruch 1, dadurch gekennzeichnet, daß in jede Flüssigkeitszuführleitung (7) mindestens ein Ventil (71) eingeschaltet ist, welches mit den Auslösemitteln (6) oder dem Antrieb (5) derart gekoppelt ist, daß das Ventil (71) bei Betätigung der Auslösemittel (6) oder bei aktiviertem Antrieb (5) öffnet und bei Nichtbetätigung der Auslösemittel (6) oder bei stillstehendem Antrieb (5) schließt.

3. Fütterungseinrichtung nach Anspruch 2, dadurch gekennzeichnet, daß durch das Ventil (71) oder durch ein zweites Ventil (72) die je Zeiteinheit oder je Trockenfutter-Mengeneinheit in das Futterförderrohr (3) eingeleitete Flüssigkeitsmenge einstellbar ist.

4. Fütterungseinrichtung nach einem der vorangehenden Ansprüche, dadurch gekennzeichnet, daß zwischen der Einmündung (70) der Flüssigkeitszuführleitung (7) in das Futterförderrohr (3) und dem Mundstück (31) eine für die Erzeugung einer brei- oder teigförmigen Futter-Flüssigkeits-Mischung ausreichend lange Mischstrecke (S) vorgesehen ist.

5. Fütterungseinrichtung nach einem der vorangehenden Ansprüche, dadurch gekennzeichnet, daß das Fördermittel (4) eine Förderschnecke mit veränderbarer Drehzahl ist.

6. Fütterungseinrichtung nach einem der vorangehenden Ansprüche, dadurch gekennzeichnet, daß die Auslösemittel (4) durch ein Paar von zwei räumlich getrennt betätigbaren Kontakten (61, 62) gebildet sind, wobei ein erster Kontakt (61) oberhalb des Mundstücks (31) und ein zweiter Kontakt (62) unterhalb des Mundstücks (31) betätigbar ist.

7. Fütterungseinrichtung nach einem der vorangehenden Ansprüche, dadurch gekennzeichnet, daß der Antrieb (5) durch einen drehzahlvariablen Elektromotor gebildet ist.

8. Fütterungseinrichtung nach einem der Ansprüche 2 bis 7, dadurch gekennzeichnet, daß das Ventil/die Ventile (71, 72) als Magnetventil und/oder als Motorstellventil ausgeführt ist/sind.

9. Fütterungseinrichtung nach einem der vorangehenden Ansprüche, dadurch gekennzeichnet, daß an dieser eine die aus dem Vorratsbehälter (2) abgegebene Futtermenge erfassende Meßeinrichtung vorgesehen ist.

10. Fütterungseinrichtung nach einem der vorangehenden Ansprüche, gekennzeichnet durch eine zentrale Steuereinheit, mit der der Antrieb (5) des Fördermittels (4), die Dosierung der zugeführten Flüssigkeit(en) und gegebenenfalls die abgegebene Futtermenge nach Maßgabe der Auslösemittel (6) und gegebenenfalls vorgegebener und/oder vorgebbarer in der Steuereinheit gespeicherter Daten steuer- und regelbar ist.

11. Fütterungseinrichtung nach Anspruch 10, dadurch gekennzeichnet, daß die Steuereinheit eine Tieridentifizierungseinrichtung umfaßt und daß in der Steuereinheit für jedes Tier (9) einer Herde die von jedem einzelnen Tier (9) aufgenommene Futtermenge individuell erfaßbar und speicherbar und auf Abruf in Form von Daten ausgebbar ist.

12. Fütterungseinrichtung nach Anspruch 11, dadurch gekennzeichnet, daß in der Steuereinheit für jedes Tier (9) der Herde je ein Fütterungsprogramm mit einer an jedes einzelne Tier (9) je Zeiteinheit abzugebenden maximalen Futtermenge vorab eingebbar, speicherbar und selbsttätig ausführbar ist.

13. Fütterungseinrichtung nach einem der vorangehenden Ansprüche, gekennzeichnet durch einen oder mehrere an das Futterförderrohr (3) angeschlossene Zusatzbehälter (8) für Zusatzfuttermittel und/oder Minerale und/oder Medikamente, die in das durch das Futterförderrohr (3) geförderte Futter einmischbar sind.

## Claims

1. Feeding installation for domestic animals, pariticularly for pigs, comprising a fodder reservoir (2), a fodder conveyor pipe (3) extending from the fodder reservoir (2), a conveyor means (4) arranged in the conveyor pipe (3), a mouth-piece (31) to be taken into the mouth of the animal (9) to be fed with the mouth-piece arranged at the free end (30) of the fodder conveyor pipe (3), and actuating means (6) for a drive unit (5) of the conveyor means (4) with the actuating means arranged in the area of the mouth-piece (31), and to be actuated by the animal (9) when gripping the mouth-piece (31),
**characterized in**
that in the course of the conveyor pipe (3) between the fodder reservoir (2) and the mouth-piece (31) at least one liquid feed pipe (7) opens, wherethrough liquid(s) in a dosed fashion may be introduced in and mixed with the fodder conveyed in the fodder conveyor pipe (3).

2. Feeding installation according to claim 1, characterized in that in each liquid feed pipe (7) at least one valve (71) is provided which is coupled with the actuating means (6) or the drive unit (5) such that the valve (71) upon actuating the actuating means (6) or with an actuated drive unit (5) opens, and upon non-actuating the actuating means (6) or with a standing drive unit (5) closes.

3. Feeding installation according to claim 2, characterized in that the liquid volume per time unit or fodder volume unit introduced in the fodder conveyor pipe (3) through the valve (71) or a second valve (72) is adjustable.

4. Feeding installation according to one of the preceeding claims, characterized in that between the mouth (70) of the liquid feed pipe (7) in the fodder conveyor pipe (3), and the mouth-piece (31) a mixing distance (S) is provided sufficiently long to produce a slurry or dough like fodder-liquid mixture.

5. Feeding installation according to one of the preceeding claims, characterized in that the conveyor means (4) is a conveyor worm with a variable number of revolutions.

6. Feeding installation according to one of the preceeding claims, characterized in that the actuating means (4) are formed by a pair of spatially separatedly actuatable contacts (61, 62) wherein a first contact (61) is actuatable above the mouth-piece (31), and a second contact (62) is actuatable below the mouth-piece (31).

7. Feeding installation according to one of the preceeding claims, characterized in that the drive unit (5) is formed by an electric motor with a variable number of revolutions.

8. Feeding installation according to one of the claims 2 to 7, characterized in that the valve(s) (71, 72) is/are formed as a solenoid valve and/or as a power control valve.

9. Feeding installation according to one of the preceeding claims, characterized in that a measuring device is provided thereat measuring the fodder volume conveyed out of the fodder reservoir (2).

10. Feeding installation according to one of the preceeding claims, characterized by a central control unit whereby the drive unit (5) of the conveyor means (4), the dosage of the liquid(s) fed, and eventually the fodder volume output is controllable according to the actuating means (6), and eventually according to data stored in the control unit with the data preset or to be preset.

11. Feeding installation according to claim 10, characterized in that the control unit encompasses an animal identification device, and that in the control unit for each animal (9) of a flock the fodder volume taken by each single animal (9) is individually measurable and storable, and to be output in form of data.

12. Feeding installation according to claim 11, characterized in that in the control unit for each animal (9) of a flock a feeding program is to be input, stored, and automatically executed with a maximal fodder volume per time unit for each animal (9).

13. Feeding installation according to one of the preceeding claims, characterized by one or several additional containers (8) connected with the fodder conveyor pipe (3) with the containers (8) containing additional fodder and/or minerals and/or therapeutical agents which are to be mixed in the fodder conveyed through the fodder conveyor pipe (3).

## Revendications

1. Mangeoire pour animaux domestiques, en particulier des porcs. comprenant un réservoir (2) de nourriture sèche ou de fourrage, un tube (3) d'alimentation en nourriture ou en fourrage partant du réservoir (2), des moyens de transport (4) disposés dans le tube d'alimentation (3), une pièce d'embouchure (31) à l'extrémité libre (30) du tube d'alimentation en nourriture (3), susceptible d'être saisie par la gueule de l'animal (9) à nourrir, et des moyens de libération (6) disposés dans la zone de la pièce d'embouchure (31) et susceptibles d'être actionnés par l'animal (9) lors de la saisie de la pièce d'embouchure (31) pour provoquer l'entraînement (5) des moyens de transport (4), caractérisée en ce que, sur le parcours du tube d'alimentation (3) entre le réservoir (2) et la pièce d'embouchure (31) débouche au moins une conduite (7) d'amenée de liquide, par l'intermédiaire de laquelle un ou plusieurs liquide(s) est/sont susceptibles d'être introduits et mélangés à la nourriture ou au fourrage transportés dans le tube d'alimentation en nourriture (3).

2. Mangeoire selon la revendication 1, caractérisée en ce que, sur chaque conduite (7) d'amenée de liquide est interposée au moins une valve (71) qui est couplée aux moyens de libération (6) ou à l'entraînement (5), de telle façon que la valve (71) soit ouverte en cas d'actionnement des moyens de libération (6) ou l'entraînement (5) activé, et soit fermée en cas de non actionnement des moyens de libération (6) ou d'entraînement arrêté (5).

3. Mangeoire selon la revendication 2, caractérisée en ce que la quantité de liquide introduite dans le tube (3) d'alimentation en nourriture par unité de temps ou par unité de quantité de nourriture sèche est réglable par la valve (71) ou par une deuxième valve (72).

4. Mangeoire selon l'une des revendications précédentes caractérisée en ce qu'entre le débouché (70) dans le tube d'alimentation en nourriture (3) de la conduite (7) d'alimentation liquide et la pièce d'embouchure (31) est prévu un tronçon de mélange (S) suffisamment long pour réaliser un mélange liquide-nourriture sous forme de liquide pâteux ou de pâte.

5. Mangeoire selon l'une des revendications précédentes, caractérisée en ce que les moyens de transport (4) sont constitués par une vis sans fin à vitesse de rotation variable.

6. Mangeoire selon l'une des revendications précédentes, caractérisée en ce que les moyens de libération (4) sont constitués par deux contacts (61, 62) susceptibles d'être actionnés de façon spatialement séparée, un premier contact (61) étant susceptible d'être actionné au-dessus de la pièce d'embouchure (31), tandis qu'un deuxième contact (62) est susceptible d'être actionné au-dessus de la pièce d'embouchure (31).

7. Mangeoire selon l'une des revendications précédentes, caractérisée en ce que l'entraînement (5) est réalisé par un moteur électrique à vitesse de rotation variable.

8. Mangeoire selon l'une des revendications 2 à 7, caractérisée en ce que la ou les valve(s) (71, 72) sont réalisées sous la forme de valves magnétiques et/ou de valves motorisées.

9. Mangeoire selon l'une des revendications précédentes, caractérisée en ce qu'elle comporte un organe de mesure mesurant la quantité de nourriture délivrée à partir du réservoir (2).

10. Mangeoire selon l'une des revendications précédentes, caractérisée par une unité centrale de commande, par l'intermédiaire de laquelle l'entraînement (5) des moyens de transport (4), le dosage du ou des liquide(s) introduit(s) et, le cas échéant, la quantité de nourriture fournie, est/sont susceptible(s) d'être contrôlé(s) et réglé(s) en fonction des moyens de libération (6) et, le cas échéant, en fonction de données prédéterminées et/ou susceptibles de l'être, et qui sont mis en mémoire dans l'unité de commande.

11. Mangeoire selon la revendication 10, caractérisée en ce que l'unité de commande comporte un organe d'identification d'animal, et en ce que, dans l'unité de commande pour chaque animal (9) d'un troupeau, la quantité de nourriture absorbée est susceptible d'être saisie individuellement pour chaque animal individuel (9), d'être mise en mémoire, et d'être restituée sur demande sous la forme de données.

12. Mangeoire selon la revendication 11, caractérisée en ce que, dans l'unité de commande pour chaque animal (9) du troupeau, est susceptible d'être introduits à l'avance, d'être mis en mémoire et d'être exécuté automatiquement un programme d'alimentation déterminant la quantité maximale de nourriture à fournir pour chaque animal individuel (9) par unité de temps.

13. Mangeoire selon l'une des revendications précédentes, caractérisée par un ou plusieurs réservoirs supplémentaires (8) reliés au tube (3) d'alimentation en nourriture, pour des produits d'aliment supplémentaires et/ou des minéraux et/ou des médicaments, et qui sont susceptibles d'être mélangés à la nourriture transportée par le tube d'alimentation en nourriture (3).
